# EUROPÄISCHE PATENTSCHRIFT

(11) **EP 0 476 464 B1**
(45) Veröffentlichungstag und Bekanntmachung des Hinweises auf die Patenterteilung: **10.08.1994**
(21) Anmeldenummer: 91115151.2
(22) Anmeldetag: 07.09.1991
(51) Int. Cl.: B01D 46/42, B01D 46/24, B01D 46/52, B01D 46/04

(54) **Verfahren und Vorrichtung zum Abscheiden gasgetragener, in Flüssigkeiten löslicher Partikel**
Process and apparatus for separating gas carried particles soluble in liquids
Procédé pour éliminer des particules suspendues dans un gaz et solubles dans des liquides

(30) Priorität: 20.09.1990 DE 4029804
(43) Veröffentlichungstag der Anmeldung: 25.03.1992
(73) Patentinhaber: Joachimsmeier, Rolf, Dipl.-Ing., D-59872 Meschede (DE)
(72) Erfinder: Moutsokapas, Asterios, Dipl.-Ing., W-5060 Bergisch-Gladbach 2 (DE); Schildgen, Karl-Hubert, Dipl.-Ing., W-5090 Leverkusen 1 (DE); Grimmelijkhuizen, Friedrich, W-5090 Leverkusen 1 (DE); Winkelmüller, Helmut, Dipl.-Ing., W-5090 Leverkusen 1 (DE); Joachimsmeier, Rolf, Dipl.-Ing., W-5778 Meschede (DE)
(74) Vertreter: Fritz, Edmund Lothar, Dipl.-Chem.

(56) Entgegenhaltungen:
- DE-A- 3 214 255
- DE-U- 8 603 418
- FR-A- 2 341 352
- GB-A- 2 095 126
- US-A- 4 145 194

## Beschreibung

Die Erfindung betrifft ein Verfahren und eine Vorrichtung zum Abscheiden gasgetragener, in Flüssigkeiten löslicher Partikel an einem an einem Trennboden aufgehängten schlauchartigen Filterelement mit Druckgasreinigung, wobei die an dem Filterelement haftengebliebenen Partikel mit einer Waschflüssigkeit abgewaschen werden, wie aus DE-A1-33 16 527 bekannt.

Produktionsanlagen für pulverförmige Güter dienen häufig der abwechselnden Herstellung verschiedenartiger Produkte, um sie entsprechend auszulasten. Bei Umstellung von einem Produkt auf das andere ist in der Regel ein gründliches Reinigen und gegebenenfalls Waschen der gesamten Anlage einschließlich der Filtervorrichtung erforderlich, um eine Kontamination des Nachfolgeproduktes zu vermeiden. Verwendet werden für die Abscheidung der bei der Produktion anfallenden Partikel aus einem Gasstrom Filtervorrichtungen mit Schlauchfilterelementen, welche mittels Waschdüsen gereinigt werden.

Derartige Schlauchfilterelemente besitzen ein ungünstiges Verhältnis von Platzbedarf zu Abscheidemenge. Obwohl das Filtermaterial eine glatte Oberfläche aufweist, ist eine größere Anzahl von Sprühdüsen erforderlich, um die gesamte Oberfläche ausreichend zu bespülen oder es müssen erhebliche Mengen an Waschflüssigkeit aufgewendet werden, welche ihrerseits wieder entsorgt werden müssen.

Es besteht die Aufgabe, ein Verfahren und eine Vorrichtung zu finden, womit bei geringem Platzbedarf ein hoher Abscheidegrad und darüber hinaus auch noch eine Herabsetzung der Waschflüssigkeitsmenge erzielt wird.

Gelöst wird diese Aufgabe dadurch, daß ein sterngefaltetes Filterelement verwendet wird, welches knapp unterhalb des Trennbodens über seinen gesamten Umfang von außen radial mit der Waschflüssigkeit beaufschlagt wird.

Sterngefaltete Filterelemente sind an sich bekannt. Bei erforderlicher Naßreinigung finden sie jedoch keinen Einsatz, weil mit den bisher üblichen Waschverfahren durch Besprühen aus Düsen kein einwandfreies Abwaschen der Partikelchen im Faltenboden gelang.

Auch bei dem neuen Verfahren erfolgt die Abtrennung der an den Filterelementen abgeschiedenen Partikelchen durch periodische Druckgasbeaufschlagung, wodurch die Partikelchen sich lösen und herabfallen. Die Naßreinigung nach dem neuen Verfahren erfolgt nur bei Produktwechsel oder wenn übermäßige Verschmutzung der Filterelemente dies notwendig machen. Überraschenderweise hat sich gezeigt, daß es völlig ausreichend ist, wenn jedes der sternförmig gefalteten Filterelemente an seinem oberen Ende, d.h. knapp unterhalb seiner Aufhängung am Trennboden, allseitig mit einem Waschflüssigkeitsstrahl beaufschlagt wird, denn nach dem Auftreffen läuft die Waschflüssigkeit insbesondere auch in den Faltenböden als geschlossener Film nach unten ab und schwemmt die Partikel fort. Der Ausnutzungsgrad der Waschflüssigkeit ist erheblich höher als bei der Verwendung von Sprühdüsen. Während nämlich bei Sprühdüsen eine erhebliche Menge der Waschflüssigkeit so zerstäubt wird, daß sie mit dem Filterelement nicht einmal in Berührung kommt, kommt nach dem neuen Verfahren praktisch die gesamte Waschflüssgkeitsmenge mit dem Filterelement in Kontakt.

Eine besonders gute Wirkung wird erzielt, wenn die Waschflüssigkeit in Form eines allseitig zur Mittelachse des Filterelementes gerichteten Flachstrahls zugeführt wird.

In diesem Fall greift der Strahl besonders wirksam in die Falten des Filterelementes ein und läuft im Faltenboden, wo in der Regel die meisten Partikel anhaften, als besonders kräftiger reinigender Film ab.

Ein weiteres besonderes Anliegen der Erfindung ist es, den Verbrauch an Waschflüssigkeit derart herabzusetzen, daß er möglichst optimal ist.

Je geringer die Waschflüssigkeitsmenge ist, desto höher ist darin die Produkt-Konzentration nach dem Waschvorgang. Je höher die Konzentration ist, desto rentabler ist es, das Produkt zurückzugewinnen und dem Prozeß wieder zuzuführen. Ist dies aus besonderen Gründen nicht möglich, so ist die Wiederaufbereitung einer höher konzentrierten Waschflüssigkeit ebenfalls rentabler als die einer schwach konzentrierten.

Gemäß einer besonderen Durchführungsform des neuen Verfahrens wird deshalb in einer ersten Spülphase eine geringe Menge frischer Waschflüssigkeit zugeführt und aus dem anfallenden Konzentrat wird das Produkt zurückgewonnen.

Wegen der hohen Konzentration kann es, gegebenenfalls unter Zwischentrocknung oder anderer Aufbereitungsschritte, dem Prozeßkreislauf wieder zugeführt werden.

In einer zweiten Spülphase, ebenfalls mit frischer Waschflüssigkeit, können dann die restlichen Partikel abgeschwemmt werden, wobei diese schwach konzentrierte Waschflüssigkeit dann entsorgt werden muß.

Da die Durchführung der zweiten Spülphase in dieser Form zwar möglich, aber unvorteilhaft ist, wird gemäß einer weiteren Variante des neuen Verfahrens vorgeschlagen, in weiteren Spülphasen mittels in Behältern zwischengelagerten, mit steigender Behälterzahl abnehmende Konzentration aufweisenden Waschflüssigkeiten aus vorangegangenen Reinigungsvorgängen zu spülen und in einer abschließenden Spülphase nochmals frische Waschflüssigkeit zuzuführen.

Das heißt, durch die aufeinanderfolgende Wiederverwendung der Waschflüssigkeit durch weitere Spülvorgänge steigt der Produktgehalt an, wodurch einerseits die Rückgewinnung des Produktes rentabel wird und andererseits die Waschflüssigkeitsmenge so gering wie möglich gehalten wird. Die abschließend zugeführte Menge an frischer Waschflüssigkeit soll der mit produktbeladenen, aus dem Reinigungsprozeß abgeführten Menge an Waschflüssigkeit entsprechen.

Gemäß einer besonderen Durchführungsform des Verfahrens läßt sich der Reinigungsvorgang noch dadurch optimieren, daß in mindestens einer der Spülphasen die Waschflüssigkeit im Kreislauf geführt wird.

Durch diese Kreislaufführung während des gleichen Spülvorganges, d.h. mit der Waschflüssigkeit aus dem gleichen Behälter, wird ebenfalls eine Aufkonzentrierung erzielt.

Vorzugsweise werden die Spülvorgänge bei unterbrochenem Filtrationsbetrieb durch die Druckgasabreinigung unterstützt.

Auf diese Weise wird eine besonders gute Reinigung der Filterelemente erreicht, weil mittels des Druckgases auch die in den Poren des Filtermaterials haftenden Partikelchen schnell gelöst werden und durch den Waschflüssigkeitsfilm nur noch weggeschwemmt zu werden brauchen.

Es versteht sich, daß nach Beendigung der Spülphasen eine Trocknungsphase nachgeschaltet werden kann, damit die Vorrichtung schnell wieder einsatzbereit ist.

Die neue Vorrichtung zum Abscheiden gasgetragener, in Flüssigkeiten löslicher Partikel, geht aus von einem Filtergehäuse mit einem Trennboden, an welchem mindestens ein schlauchartiges Filterelement aufgehängt ist, wobei das Filtergehäuse unterhalb des Trennbodens einen Einlaß für einen partikelbeladenen Gasstrom, eine auf das Filterelement gerichtete Waschflüssigkeitsdüse und am Boden einen Auslaß für die abgeschiedenen Partikel und einen Auslaß für Waschflüssigkeit aufweist, wobei oberhalb des Trennbodens ein Auslaß für den gereinigten Gasstrom sowie ein mit einem Absperrventil ausgestatteter, mit einer Druckgasquelle verbundener Einlaß vorgesehen sind.

Das Neue ist darin zu sehen, daß das Filterelement Sternfaltung aufweist, daß die Waschflüssigkeitsdüse direkt unterhalb des Trennboden angeordnet ist und mit ihrer Düsenöffnung das Filterlement ringförmig umgibt.

In dem Filtergehäuse sind dabei in der Regel mehrere Filterelemente angeordnet, wobei jedem Filterelement eine eigene Waschflüssigkeitsdüse in der beschriebenen Art zugeordnet sein muß. Solche Waschflüssigkeitsdüsen lassen sich in einfachster Weise aus übereinander angeordneten Ringen entsprechenden Durchmessers zusammensetzen, welche gegeneinander abgedichtet sind und eine Ringkammer bilden, von welcher ein auf das Filterelement gerichteter Düsenspalt abführt. Dem Prinzip nach kann anstelle eines Düsenspaltes auch ein Kranz von Düsenbohrungen vorgesehen sein. Der Abstand der Bohrungen voneinander darf jedoch nicht zu groß sein.

Es hat sich als besonders zweckmäßig erwiesen, wenn die Düsenöffnung senkrecht auf das Filterelement weist.

In diesem Fall ist der Aufbau für die Herstellung der Düse am günstigsten und auch die Strahlwirkung genügt den Ansprüchen an den Reinigungseffekt.

Vorzugsweise ist der Auslaß des Filtergehäuses für die Waschflüssigkeit über eine mit einem Absperrventil versehene Leitung mit mindestens einem Behälter verbunden und mindestens einer der Behälter ist andererseits über eine mit einem Absperrventil und einer Pumpe versehene Leitung mit der Waschflüssigkeitsdüse verbunden.

Dieser Aufbau erlaubt es, Waschflüssigkeiten aus den Spülvorgängen zu speichern und in einer weiteren Spülphase erneut der Waschflüssigkeitsdüse zuzuführen und/oder während einer Spülphase durch den gleichen Behälter im Kreislauf zu führen. Es versteht sich dabei, daß das Leitungssystem durch Verzweigung bzw. Zusammenführung und durch in den Zweigleitungen vorgesehene Absperrventile rationell aufgebaut sein kann.

Vorzugsweise ist jeder Behälter mit dem vorangehenden Behälter über eine Leitung verbunden.

Dadurch ist es möglich, die Waschflüssigkeit eines jeden Behälters nach Art einer Kaskade in den vorangehenden Behälter einzuleiten. Selbstverständlich kann das Leitungssystem auch so ausgestaltet sein, daß gewünschtenfalls jeder Behälter mit jedem verbunden werden kann, wodurch sich noch mehr Möglichkeiten ergeben.

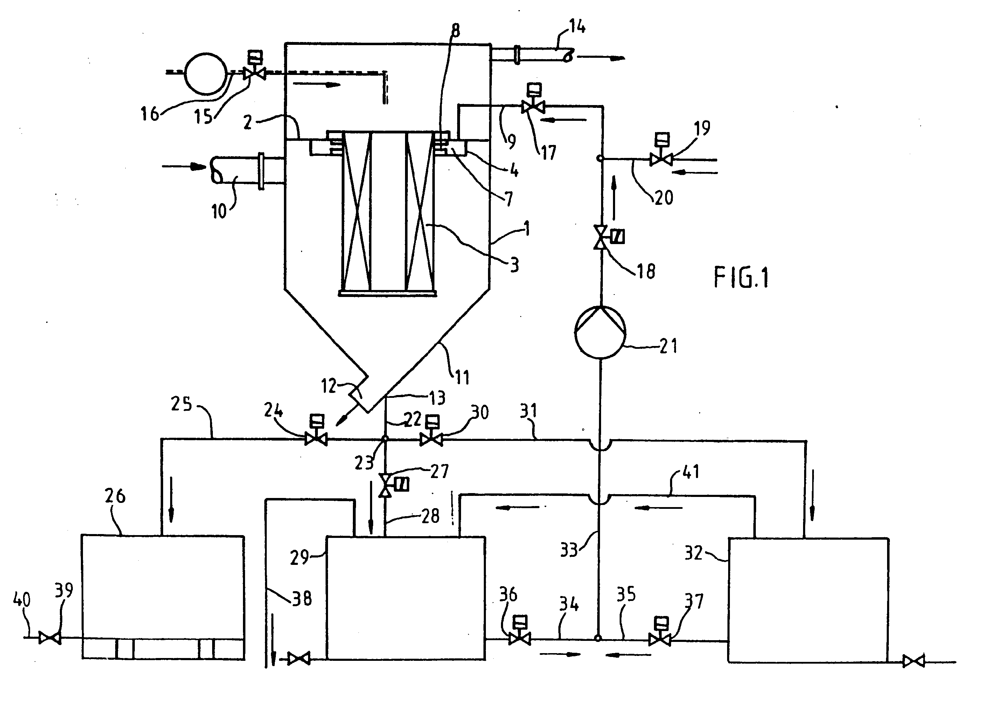

In der Zeichnung ist die neue Vorrichtung in einem Ausführungsbeispiel rein schematisch in
- Fig. 1: im Fließschema dargestellt,
- Fig. 2: zeigt einen Längsschnitt durch die Waschflüssigkeitsdüse und
- Fig. 3: einen Querschnitt durch das Sternfilterelement im Abriß.

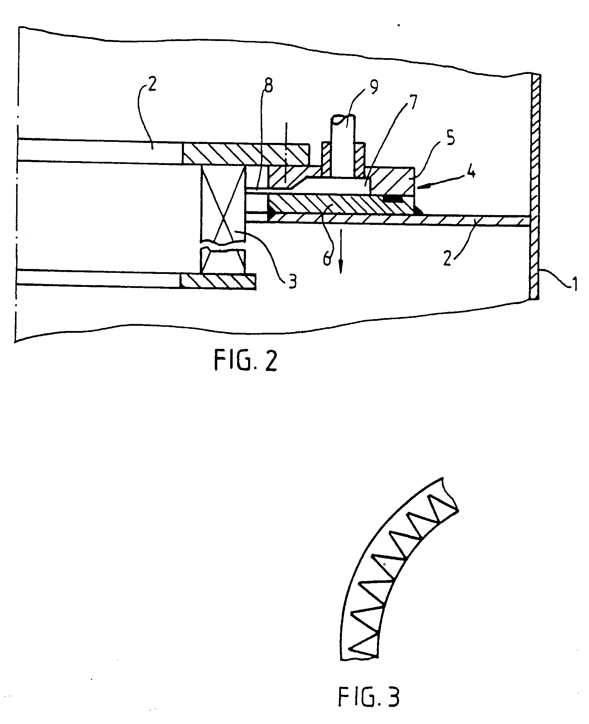

Die Vorrichtung besteht aus einem Filtergehäuse 1 mit einem Trennboden 2. An diesem ist ein sterngefaltetes Filterelement 3 aufgehängt, welches knapp unterhalb des Trennbodens 2 mit einer Waschflüssigkeitsdüse 4 umgeben ist. Diese besteht aus zwei gegeneinander abgedichteten Ringen 5,6 (Fig. 2), welche zwischen sich eine Kammer 7 sowie eine zum Filterelement 3 gerichtete, spaltförmige Düsenöffnung 8 bilden. Die Flüssigkeitsdüse 4 ist am Trennboden 2 befestigt und ihre Kammer 7 ist mit einer Leitung 9 verbunden. Unterhalb des Trennbodens 2 mündet eine das partikelhaltige Gas zuführende Leitung 10 in das Filtergehäuse 1 ein. An seinem konischen Boden 11 weist das Filtergehäuse 1 einen Auslaß 12 für das Austragen der abgeschiedenen Partikel sowie einen absperrbaren Auslaß 13 für die beladene Waschflüssigkeit auf. Für die Reinigung des Filtergehäuses 1 unterhalb des Trennbodens 2 einschließlich der unteren Seite des Trennbodens 2 werden, hier nicht dargestellt, Spritzdüsen verwendet, die vom gleichen Waschflüssigkeitssystem wie die Ringdüsen mit Waschflüssigkeit versorgt und nach Bedarf eingeschaltet werden. Oberhalb des Trennbodens 2 führt eine Gasleitung 14 ab und es mündet eine, mit einem Absperrventil 15 versehene Leitung 16 zum Zuführen von Druckgas ein, mit welchem durch periodische Druckstösse die am Filterelement 3 abgeschiedenen Partikelchen abgestoßen werden. Die Leitung 9 weist Absperrventile 17, 18 auf, zwischen denen eine mit einem Absperrventil 19 versehene, mit einer nicht dargestellten Quelle für frische Waschflüssigkeit verbundene Leitung 20 einmündet. Die Leitung 9 steht mit der Druckseite einer Pumpe 21 in Verbindung. An den Auslaß 13 schließt ein Leitungsabschnitt 22 an, welcher in ein Verzweigungsstück 23 mündet. An dieses sind über einen mit einem Absperrventil 24 versehenen Leitungsabschnitt 25 ein Behälter 26, über einen mit einem Absperrventil 27 versehenen Leitungsabschnitt 28 ein Behälter 29 und über einen mit einem Absperrventil 30 versehenen Leitungsabschnitt 31, ein Behälter 32 angeschlossen. Saugseitig steht die Pumpe 21 über Leitungsabschnitte 33 und 34 mit dem Behälter 29 und über die Leitungsabschnitte 33 und 35 mit dem Behälter 32 in Verbindung. In den Leitungsabschnitten 34 und 35 sind Absperrventile 36, 37 angeordnet. Von dem Behälter 29 führt eine Leitung 38 zu einer nicht dargestellten Rückgewinnungsanlage bzw. Entsorgunganlage ab. Vom Behälter 26 führt ebenfalls eine mit einem Absperrventil 39 versehene Leitung 40 ab, welche das Konzentrat einer Weiterverarbeitung zuführt. Die Behälter 32 und 29 sind über eine Leitung 41 verbunden.

Der Verfahrensablauf ist wie folgt:

Über die Leitung 10 wird ein mit Partikeln beladener Gasstrom in das Filtergehäuse 1 eingeführt und die Partikel beim Durchtritt des Gases durch das Filterelement 3 abgeschieden. Der Trägergasstrom verläßt das Filtergehäuse 1 durch den Auslaß 14. Die Partikel werden durch periodisches Öffnen des Absperrventils 15 durch Druckgasstöße vom Filterelement 3 abgestoßen und sammeln sich am Boden 11 an, wo sie in gewissen Zeitabständen durch den absperrbaren Auslaß 12 ausgeschleust werden.

Wird nun ein Trägergasstrom zugeführt, der Partikel eines anderen Produktes enthält, welches nicht mit dem vorhergehenden kontaminiert werden darf, so muß das Filterelement 3 vorher gewaschen werden. Hierzu wird durch Öffnen des Absperrventils 19 über die Leitung 20 eine geringe Menge frischer Waschflüssigkeit der Waschflüssigkeitsdüse 4 zugeführt. Die Absperrventile 17, 13 und 24 sind ebenfalls geöffnet, ebenso das Absperrventil 15; letzteres um den Reinigungsvorgang durch Druckgasabreinigung zu unterstützen. Alle anderen Absperrventile sind geschlossen. Die Waschflüssigkeit trifft als flacher, radial gegen das Filterelement 3 gerichteter Strahl, welcher aus dem Düsenspalt 8 austritt, auf das Filterelement 3 auf und dringt bis in die Faltenböden vor, läuft als geschlossener Film nach unten ab und schwemmt dabei die abgelösten Partikel mit weg. Die mit Produkt beladene Waschflüssigkeit wird im Behälter 26 gesammelt und wird von dort über eine Leitung 40 in den Produktionsprozeß zurückgeführt.

In einer zweiten Spülphase wird Waschflüssigkeit aus dem Behälter 29 bei geöffneten Absperrventilen 36, 18, 17 und 27 sowie 15 über die Leitungen 34, 33 und 9 zur Waschflüssigkeitsdüse 4 und weiter durch den Auslaß 13 und die Leitungsabschnitte 22 und 28 mehrmals im Kreislauf geführt, während alle anderen Absperrventile geschlossen sind. Diese Waschflüssigkeit stammt aus früheren Reinigungsvorgängen und weist eine mittelstarke Konzentration am Produkt auf.

In einer dritten Spülphase wird die im Behälter 32 befindliche, schwächer konzentrierte und ebenfalls aus einem früheren Reinigungsvorgang stammende Waschflüssigkeit bei geöffneten Absperrventilen 37, 18, 17 und 30 sowie 15, ebenfalls im Kreislauf gefahren, und zwar über die Leitungsabschnitte 35, 33, 9, die Waschflüssigkeitsdüse 4, den Auslaß 13 und die Leitungsabschnitte 22 und 31.

In einem abschließenden vierten Spülgang wird frische Waschflüssigkeit bei geöffnetem Absperrventil 19 durch die Leitung 20 eingespeist und der Waschflüssigkeitsdüse 4 zugeführt. Bei diesem Spülvorgang sind desweiteren die Absperrventile 17 und 30 geöffnet; alle anderen sind geschlossen. Die anfallende Waschflüssigkeit strömt durch den Leitungsabschnitt 31 in den Behälter 32. Die in diesem befindliche alte Waschflüssigkeit wird über die Leitung 41 in den Behälter 29 verdrängt, aus welchem wiederum die darin befindliche, höher konzentrierte Waschflüssigkeit über die Leitung 38 verdrängt und der Abwasseraufbereitung zur Entsorgung zugeführt wird. Auch während dieser Spülphase ist das Absperrventil 15 für die Unterstützung durch Druckgasabreinigung geöffnet. Es bleibt auch nach Beendigung der Zufuhr frischer Waschflüssigkeit noch eine Zeitlang geöffnet, um die im Filtermaterial gespeicherte Waschflüssigkeit weitgehend zu entfernen, wodurch die anschließende Trocknungsphase verkürzt wird.

## Patentansprüche

1. Verfahren zum Abscheiden gasgetragener, in Flüssigkeiten löslicher Partikel an mindestens einem an einem Trennboden (2) aufgehängten schlauchartigen Filterelement (3) mit Druckgasabreinigung (15, 16), wobei die an dem Filterelement (3) haftengebliebenen Partikel mit einer Waschflüssigkeit abgewaschen werden, dadurch gekennzeichnet, daß ein sterngefaltetes Filterelement (3) verwendet wird, welches knapp unterhalb des Trennbodens (2) über seinen gesamten Umfang von außen radial mit der Waschflüssigkeit beaufschlagt wird.

2. Verfahren nach Anspruch 1, dadurch gekennzeichnet, daß die Waschflüssigkeit in Form eines allseitig zur Mittelachse des Filterelementes (3) gerichteten Flachstrahls zugeführt wird.

3. Verfahren nach Anspruch 1 oder 2, dadurch gekennzeichnet, daß in einer ersten Spülphase eine geringe Menge frischer Waschflüssigkeit zugeführt wird und daß aus dem anfallenden Konzentrat das Produkt zurückgewonnen wird.

4. Verfahren nach Anspruch 3, dadurch gekennzeichnet, daß in einer weiteren Spülphase mittels in Behältern (29, 30) zwischengelagerten, mit steigender Behälterzahl abnehmende Konzentration aufweisenden Waschflüssigkeiten aus vorangegangenen Reinigungsvorgängen gespült wird und daß in einer abschließenden Spülphase nochmals frische Waschflüssigkeit zugeführt wird.

5. Verfahren nach einem der Ansprüche 3 oder 4, dadurch gekennzeichnet, daß in mindestens einer der Spülphasen die Waschflüssigkeit im Kreislauf geführt wird.

6. Verfahren nach Anspruch 4 oder 5, dadurch gekennzeichnet, daß die aus der zweiten Spülphase in einem Behälter (29) gesammelte mittelstark konzentrierte Waschflüssigkeit der Entsorgung zugeführt wird, die in weiteren Behältern (32) befindliche Waschflüssigkeiten abnehmender Konzentration jeweils in den vorhergehenden Behältern (29) überführt werden und daß die aus dem abschließenden Spülvorgang gewonnene Waschflüssigkeit in den letzten Behälter (32) geleitet wird.

7. Verfahren nach einem der Ansprüche 1 bis 6, dadurch gekennzeichnet, daß die Spülvorgänge bei unterbrochenem Filtrationsbetrieb durch die Druckgasabreinigung unterstützt werden.

8. Vorrichtung zum Abscheiden gasgetragener, in Flüssigkeiten löslicher Partikel, bestehend aus einem Filtergehäuse (1) mit einem Trennboden (2), an welchem mindestens ein schlauchartiges Filterelement (3) aufgehängt ist, wobei das Filtergehäuse (1) unterhalb des Trennbodens (2) einen Einlaß (10) für einen partikelbeladenen Gasstrom, eine auf das Filterelement (3) gerichtete Waschflüssigkeitsdüse (4) und am Boden (11) einen Auslaß (12) für die abgeschiedenen Partikel und einen Auslaß (13) für Waschflüssigkeit aufweist, wobei oberhalb des Trennbodens (2) ein Auslaß (14) für den gereinigten Gasstrom sowie ein mit einem Absperrventil (15) ausgestatteter, mit einer Druckgasquelle verbundener Einlaß (16) vorgesehen sind, dadurch gekennzeichnet, daß das Filterelement (3) Sternfaltung aufweist, daß für jedes Filterelement eine Waschflüssigkeitsdüse (4) direkt unterhalb des Trennbodens (2) angeordnet ist und mit ihrer Düsenöffnung (8) das Filterelement (3) ringförmig umgibt.

9. Vorrichtung nach Anspruch 8, dadurch gekennzeichnet, daß die Düsenöffnung (8) senkrecht auf das Filterelement (3) weist.

10. Vorrichtung nach Anspruch 8 oder 9, dadurch gekennzeichnet, daß der Auslaß (13) des Filtergehäuses (1) für die Waschflüssigkeit über eine mit einem Absperrventil (24, 27, 30) versehene Leitung (22, 25, 31) mit mindestens einem Behälter (25, 29, 32) verbunden ist, daß mindestens einer der Behälter (29, 32), andererseits über eine mit einem Absperrventil (17, 18, 36, 37) und einer Pumpe (21) versehene Leitung (34, 35, 33, 9) mit der Waschflüssigkeitsdüse (4) verbunden ist.

11. Vorrichtung nach Anspruch 10, dadurch gekennzeichnet, daß mindestens ein Behälter (32) mit dem vorhergehenden Behälter (29) über eine Leitung (41) verbunden ist.

## Claims

1. Process for separating gas carried particles soluble in liquids at at least one hose-like filter element (3) suspended at a separating plate (2) with pressure gas cleaning (15, 16), the particles adhering to the filter element (3) being washed off by a washing fluid, characterised in that a filter element (3) folded star-like is used which is impinged by the washing fluid radially from the outside over its whole circumference shortly below the separating plate (2).

2. Process as claimed in claim 1, characterised in that the washing fluid is fed in the form of a flat jet directed on all sides to the central axis of the filter element (3).

3. Process as claimed in claim 1 or 2, characterised in that in a first scavenging phase a low quantity of fresh washing fluid is supplied and that the product is recovered from the concentrate obtained.

4. Process as claimed in claim 3, characterised in that in a further scavenging phase the scavenging is effected with washing fluids from previous cleaning processes temporarily stored in containers (29, 30) and having a continuously decreasing concentration with increasing number of containers, and that in a final scavenging phase again fresh washing fluid is supplied.

5. Process as claimed in claim 3 or 4, characterised in that in at least one of the scavenging phases the washing liquid is recycled.

6. Process as claimed in claim 4 or 5, characterised in that medium concentrated washing fluid of the second scavenging phase collected in a container (29) is fed to the disposal site, the washing fluids with decreasing concentration contained in further containers are conveyed to the preceding container (29), and that the washing fluid recovered in the final scavenging process is fed to the last container (32).

7. Process as claimed in any one of claims 1 to 6, characterised in that the scavenging processes are supported in the case of interrupted filtering operation by the pressure gas cleaning.

8. Apparatus for separating gas carried particles soluble in liquids, consisting of a filter housing (1) with a separating plate (2) at which at least one hose-like filter element (3) is suspended, the filter housing (1) comprising below the separating plate (2) an inlet for a gas stream charged with particles, a nozzle (4) for the washing fluid directed towards the filter element (3), and, at the bottom (11), an outlet (12) for the separated particles and an outlet (13) for the washing fluid, above the separating plate (2) an outlet (14) for the cleaned gas stream as well as an inlet (16) connected to a pressure gas source and provided with a shut-off valve (15) being provided, characterised in that the filter element (3) comprises a star-like folding and that for each filter element a nozzle (4) for the washing fluid is arranged directly below the separating plate (2) which annularly surrounds with its nozzle opening (8) the filter element (3).

9. Apparatus as claimed in claim 8, characterised in that the nozzle opening (8) is directed vertically towards the filter element (3).

10. Apparatus as claimed in claim 8 or 9, characterised in that the outlet (13) of the filter housing (1) for the washing fluid is connected to at least one container (25, 29, 32) by means of a conduit (22, 25, 31) provided with a shut-off valve (24, 27, 30), and that, on the other hand, at least one of the containers (29, 32) is connected to the nozzle (4) for the washing fluid by means of a conduit (34, 35, 33, 9) provided with a shut-off valve (17, 18, 36, 37) and a pump (21).

11. Apparatus as claimed in claim 10, characterised in that at least one container (32) is connected to the preceding container (29) by means of a conduit (41).

## Revendications

1. Procédé pour éliminer des particules suspendues dans un gaz et solubles dans des liquides à un élément filtrant (3) tubulaire suspendu à un rayon séparant (2) avec nettoyage par gaz comprimé (15, 16), les particules qui adhèrent à l'élément filtrant (3) sont lavées au moyen d'un liquide laveur, caractérisé en ce qu'un élément filtrant (3) plissé en forme d'étoile est utilisé qui est arrosé radialement du dehors par le liquide laveur par sa circonférence totale juste au-dessous du rayon séparant (2).

2. Procédé selon la revendication 1, caractérisé en ce que le liquide laveur est amené en forme d'un jet plat dirigé de tous côtés vers l'axe central d'élément filtrant (3).

3. Procédé selon la revendication 1 ou 2, caractérisé en ce qu'une petite quantité du liquide laveur frais est amené au cours d'une première phase de rinçage et que le produit est récupéré du concentré résultant.

4. Procédé selon la revendication 3, caractérisé en ce que pendant une d'autre phase de rinçage des liquides laveurs dérivant de procédés de nettoyage précédé qui sont paliés intermédiairement dans des réservoir (29, 30) sont utilisés qui ont une concentration qui diminue continuellement avec 1' augmentation de la nombre des réservoirs, et que pendant une phase de rinçage finale du liquide laveur frais est amené encore une fois.

5. Procédé selon la revendication 3 ou 4, caractérisé en ce que pendant au moins une des phases de rinçage le liquide laveur est récupéré.

6. Procédé selon la revendication 4 ou 5, caractérisé en que le liquide laveur de la deuxième phase de rinçage avec une concentration moyenne rassemblée dans un réservoir (29) est amené à l'enlèvement, les liquides laveurs se trouvant dans d'autres réservoirs (32) avec des concentrations diminuées sont amenés au réservoir précédant (29) et que le liquide laveur récupéré de la phase de rinçage finale est amené au dernier réservoir (32).

7. Procédé selon une des revendications 1 à 6, caractérisé en ce que les phases de rinçage sont assistées par le nettoyage par gaz comprimé en cas d'un opération de filtrage interrompu.

8. Dispositif pour éliminer des particules suspendues dans un gaz et solubles dans des liquides, comprenant un carter de filtre (1) avec un rayon séparant (2) auquel au moins un élément filtrant (3) tubulaire est suspendu, le carter de filtre (1) comprenant au-dessous du rayon séparant (2) une admission (10) pour un courant de gaz chargé de particules, une tuyère (4) pour le liquide laveur dirigée vers l'élément filtrant (3) et, au fond (11), un échappement (12) pour les particules éliminées et un échappement (13) pour le liquide laveur; au-dessus du rayon séparant (2) un échappement (14) pour le courant de gaz purifié aussi qu'une admission (16) reliée avec une source de gaz comprimé et équipé avec une poupape d'arrêt (15) étant prévues, caractérisé en ce que l'élément filtrant (3) comprend un plissement en forme d'étoile et qu'une tuyère (4) pour le liquide laveur est prévue pour chaque élément filtrant immédiatement au-dessous du rayon séparant (2) et entoure avec son orifice de tuyère (8) l'élément filtrant (3) en forme d'anneau.

9. Dispositif selon la revendication 8, caractérisé en ce que l'orifice de tuyère (8) est dirigée perpendiculairement sur l'élément filtrant (3).

10. Dispositif selon la revendication 8 ou 9, caractérisé en ce que l'échappement (13) du carter de filtre (1) pour le liquide laveur est raccordé par l'intermédiaire d'un conduit (22, 25, 31) comprenant une soupape d'arrêt (24, 27, 30) avec au moins un réservoir (25, 29, 32) et qu'au moins un de ces réservoirs (29, 32) est raccordé par l'intermediaire d'un conduit (34, 35, 33, 9) comprenant une soupape d'arrêt (17, 18, 36, 37) et une pompe (21) avec la tuyère (4) pour le liquide laveur.

11. Dispositif selon la revendication 10, caractérisé en ce qu'au moins un réservoir (32) est raccordé avec le réservoir (29) précédant par l'intermédiaire d'un conduit (41).
